# EUROPEAN PATENT SPECIFICATION

(11) **EP 3 837 967 B1**
(45) Date of publication and mention of the grant of the patent: **15.11.2023**
(21) Application number: 20000450.5
(22) Date of filing: 09.12.2020
(51) Int. Cl.: A01G 31/02, A01G 31/04

(54) **DEVICE FOR THE AEROPONIC CULTIVATION OF PLANT PRODUCTS**
GERÄT FÜR DIE AEROPONIC KULTIVATION VON PFLANZ PRODUKTEN
DISPOSITIF POUR LA CULTURE HYDROPONIQUE DES PRODUITS VÉGÉTAUX

(30) Priority: 16.12.2019 IT 201900024180
(43) Date of publication of application: 23.06.2021
(73) Proprietor: AGRICOOLTUR S.p.A., 10044 Carignano (TO) (IT)
(72) Inventor: Divia', Bartolomeo Marco Giusto, 10040 Osasio (TO) (IT)
(74) Representative: Cian, Paolo

(56) References cited:
- WO-A1-2016/023948
- WO-A1-2019/222827
- CN-A- 106 416 989
- US-A- 4 669 217
- US-A1- 2017 202 163

## Description

The present invention relates in general to the field of production of plant products, as horticultural products such as vegetables to be eaten fresh and aromatic herbs, or other species of plants, by means of soilless cultivation techniques.

More specifically, the invention relates to a device for the aeroponic cultivation of plant products.

Usually, production and harvesting of vegetable or horticultural products takes place in a restricted environment, and the harvesting and packaging steps, for the purpose of their distribution and sale, require the use of significant labor.

When a plant product is harvested, commonly its roots are removed. This entails that such products are no longer able to absorb water, with the consequence that their further growth is not possible as the tissues of these products, from the time of their collection at the production site, cease to be viable and their deterioration step starts. Phenomena of decay of the substances they contain are triggered in these products as a result of the root removal, which causes their organoleptic and nutritional characteristics to be progressively worsen from the harvesting time. If these products are intended for sale, they are already degraded or otherwise severely dehydrated when they reach the sales facility, which often negatively affects the possibility of their sale. If, instead, the purpose of these products is to allow growth of flowers or leaves to be cut, or of fruits to be collected in view of their sale, root removal prevents their further growth, with the consequence that other subsequent collection steps are not possible.

The invention takes the cue from the idea that a cultivation device allowing a plant product to be kept with its root system intact, would permit the plant to be kept viable for a relatively long time. Therefore, in the case of plant products intended for sale, these could be taken from the production site, as well as transported and displayed for sale, in the optimal vegetative conditions. In this manner, the end user could have a fresh product, which does not undergo the decline step after harvesting, with its organoleptic and nutritional properties unaltered, and decide if and when to separate the plant from its root system, so as to be able to keep the quality of the plant product unchanged for a relatively long time compared to common plant products subject to the usual harvesting step, also allowing the waste resulting from deterioration of the plant products to be limited.

On the other hand, in the case of plant products intended for production of flowers or leaves to be cut, or of fruits to be harvested, they can be kept in the vital state for a relatively long time regardless of the number of stages of harvesting of their flowers, leaves or fruits, thus to be able to obtain a series of subsequent harvests.

The known so-called "aeroponic" cultivation technique allows plants to be fed by nebulizing water enriched with mineral fertilizers and sprayed directly on the root system of the plants, to allow their development without the use of soil or other granular support materials. This technique is particularly suitable for allowing plant products intended for sale to final consumers to be cultivated and transported, and its use also allows the exposure of plants to pests and pathogens to be avoided, as well as to improve the oxygenation level of the root system of the plants, which favors their development.

Unlike the known "hydroponic" cultivation technique, in which the root system of the plants is constantly immersed in water and nutrients, the "aeroponic" cultivation technique exploits the supply of moist air and nutrients on the roots of the plants, and it has the advantage of allowing water and nutrients to be considerably saved as their amount which is not directly absorbed by the roots can be recovered and put back into circulation in the cultivation system.

A device for the aeroponic cultivation of plant products is known from US-2012/085026 and comprises a plurality of stationary containers closed by respective plate-shaped lids, in which seats are formed to removably receive pots for containing and supporting the respective plant products. These pots are provided with openings to allow the roots of the plant product to communicate with the inside of the respective container, where a nutritional fluid containing water and nutrients is fed by nebulization on the roots of the plant products, through a hydraulic line connected to the delivery of a pump.

However, the device of this prior document requires the manual intervention of operators to insert or remove the pots from the plate-shaped lids, to apply the plate-shaped lids on the containers and to remove them at the end of the growth of the plant products, as well as the useful space for allowing the passage of operators between the various stationary containers, which entails considerable costs due both to the labor required and to have a relatively large space for installing the device.

In particular, the invention relates to an aeroponic cultivation device of the type defined in the attached claim 1.

A device for the aeroponic cultivation of plant products of the type defined above is known from WO 2016/023948 A1 that discloses a device for the aeroponic cultivation of vegetable products comprising a plurality of movable support plates, each of which is provided with at least one seat for removably receiving a respective pot containing a vegetable product, which pot is provided of openings to allow communication between its interior and the outer environment, and at least one fixed container equipped with spray nozzles associated with hydraulic pipes to deliver a nutritional fluid containing water and nutrients to the roots of the plant products when one or more pots are at this container. This cultivation device comprises a feeding station for feeding the plates in succession to a transit path along which the relevant vegetable products are subjected to a growth phase, and a collecting/discard station for collecting/discarding said plates, at which the plates are fed upon reaching a predetermined growth or upon the occurrence of an anomalous growth condition, and handling means for moving said plates in succession between the aforesaid feed and collection/discard stations.

Moreover, document US 4 669 217 A relates to an aeroponic device for growing stationary plants, which comprises a monitoring station including a sensor adapted to get information relating to the growth and/or the status of the plants associated with the device and which, in particular, monitors constantly the rate of growth of the plants to determine if it meets or exceeds a parameter set for the ripening period, while document WO 2019/222827 A1 refers to an aeroponic device for growing stationary plants, which is equipped with cameras for capturing images of the plants and with software applications to analyze the captured images by means of analysis techniques in order to determine if the plants are suffering from a deficiency of nutritional fluid.

The object of the present invention is to propose an aeroponic cultivation device for plant products which takes up relatively little space, which has a relatively simple structure, which can operate in the most automatic manner as possible so as to require a minimum use of labor, and which also allows a reduced quantity of nutritional fluid to be used with respect to the aeroponic systems known so far.

This object is achieved by the invention by virtue of the fact that the device comprises a transit path of the plant products along which the relevant plant products are subjected to a growth step, a feeding station intended to feed in succession said plates to said transit path, a collection/discard station for collecting/discarding said plates, to which the plates are fed from the transit path upon reaching a predetermined growth or upon the occurrence of an anomalous growth condition, and moving means intended to move said plates in succession between the aforesaid feed and collection/discard stations, and in that a monitoring location is provided along the transit path, which is connected to a programmable control unit associated with the device to manage its operation, which location includes sensor means adapted to detect the presence of each plate when it passes at said monitoring location, and a memory associated with the control unit, in which sample characteristics of the plant products are stored, with the purpose of deriving at least one information related to the growth and/or to the condition of the plant products associated with that plate to decide whether that plate must continue along the transit path or it must be sent to said collection/discard station.

By virtue of these features, the device of the invention can be managed in an almost totally automatic manner so as to drastically reduce the use of labor, and to allow the production of horticultural or plant products to take place in a particularly restricted area, for example inside an enclosed or covered area.

According to another preferred feature of the invention, said control unit is adapted to determine the growth time of the plant products associated with a plate and whether they have reached a predetermined growth condition for sending it to the collection/discard station as a result of a comparison of the characteristics of the plant products detected by said sensor means and the sample characteristics of the plant products stored in said memory associated with the control unit.

These features favor the automatic management of the device of the invention, which allows its automatic operation to be achieved. Furthermore, the plant products monitoring step performed at the monitoring location allows to standardize their quality and to prevent defects, as well as to customize the treatments to be performed on the various plant products, particularly in the case in which the various plates of the device receive plant products of different types.

According to a further preferred feature, the transit path comprises a forward line and a return line interposed between said feeding and collection/discard stations for feeding or collecting/discarding said plates, which forward and return lines define together a substantially loop path for moving said plates.

By virtue of this feature, the size of the device can be kept particularly compact to the full advantage of reducing the space required for its installation.

According to yet another preferred feature, each of said forward and return lines of the transit path comprises longitudinal movement means including respective motorized conveyor belts for moving longitudinally in succession said plates, at least the conveyor belt of one of said forward or return lines that extends above said nourishment containers being provided with bottom openings.

According to a still further preferred feature in connection with a first embodiment of the invention, said forward and return lines of the transit path are arranged side by side substantially on a same plane, and respective transverse translation means of the plates are provided at both ends of said forward and return lines to translate the plates laterally from the forward line to the return line, or vice-versa.

As an alternative, and according to yet another feature in connection with another embodiment of the invention, said forward and return lines of the transit path are arranged substantially on a vertical plane so as to be superimposed, and respective vertical translation means of the plates are provided at both the ends of said forward and return lines to translate the plates from the forward line to the return line, or vice versa.

Both of these embodiments of the device of the invention allow the space necessary for the installation and operation of the device of the invention to be minimized.

According to yet another preferred feature, the transverse translation means of the plates include a small conveyor belt intended to apply a longitudinal movement to one plate at a time from or to said forward line or said return line, or from said feeding station towards said forward line, as well as from said forward line to the collection/discard station and from the collection/discard station to said return line.

These features allow the automatic operation of the device in order to minimize the need for intervention by operators.

According to further preferred characteristics, the device of the invention comprises lighting means of the plant products, which means can be activated as a function of the outcome of the monitoring carried out at said monitoring location, and/or each nourishment container comprises ozonizing means for ozonizing said nourishing fluid.

Further features and advantages of the invention will appear more clearly from the detailed description below, provided purely by way of non-limiting example and referred to the attached drawings in which:
Figure 1 is a side elevational view of a first embodiment of the device of the invention, which defines a transit path including a forward line and a return line side by side on the same plane,
Figure 2 is a top elevational view of the device from the side of arrow II of Figure 1,
Figure 3 is a schematic perspective and exploded view showing a pair of support plates which have seats for removably receiving respective pots for containing plant products,
Figure 4 is an enlarged perspective view of a pot and a respective plant product,
Figure 5 is a perspective schematic view showing a pair of plates arranged in succession along a line of the transit path of the device of the invention and indicated by arrow V of Figure 2, each of which plates accommodate pots containing different plant products,
Figure 6 is a side elevational view of another embodiment of the device of the invention, which defines a transit path including a forward line and a return line superimposed on the same plane, and
Figure 7 is a top elevational view of the device from the side of arrow VII of Figure 6.

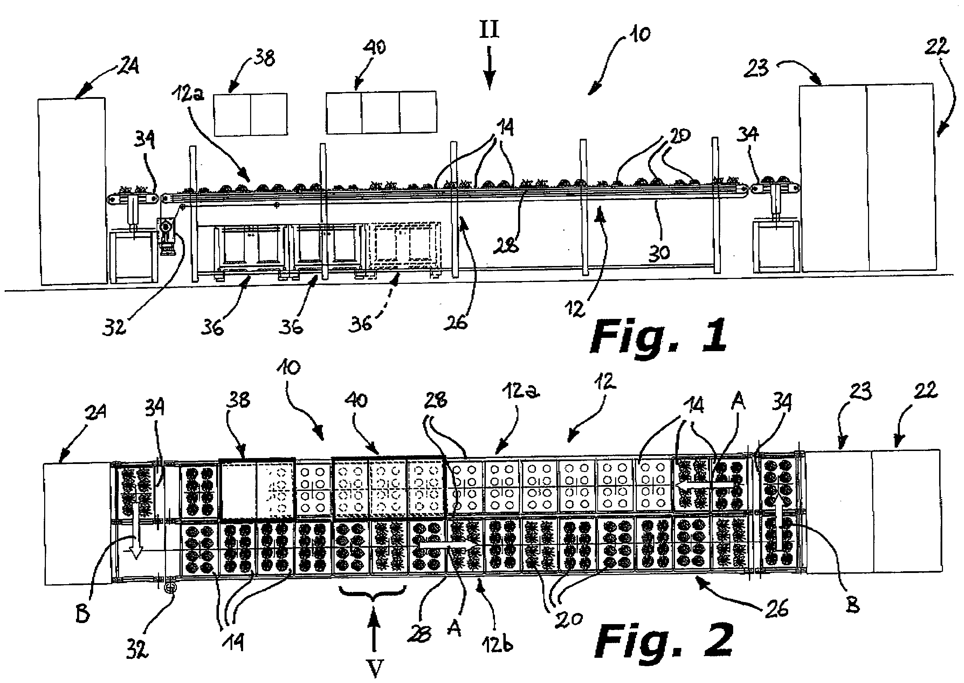

With initial reference to Figures 1 to 5, a first embodiment of a device for the aeroponic cultivation of plant products according to the invention is indicated 10 as a whole.

The device 10 comprises a transit path 12 along which a plurality of plates 14 are slidably mounted, each of which supports at least one plant product 20 during its growth step which can last a few weeks, indicatively about 30 days.

A unique identification member (not shown in the drawings), typically consisting of a bar code or the like, is associated with each plate 14 on a surface area thereof visible from the outside.

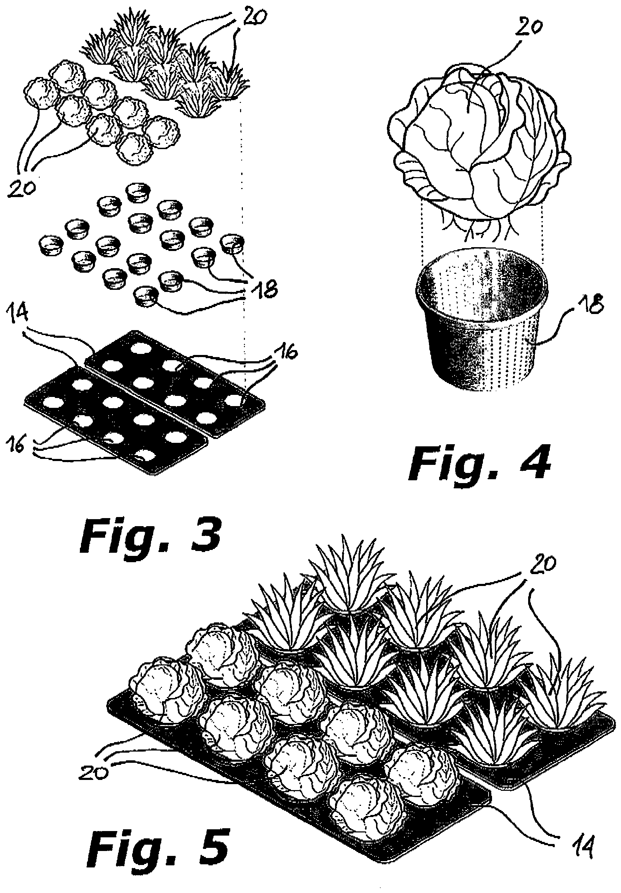

With specific reference to figures 3 to 5, each plate 14 is provided with a series of holes 16, for example eight holes with reference to the figures, each of which is intended to removably receive a respective pot 18 for containing a plant product 20. Each pot 18 has a series of circular or square openings to allow communication of the interior of the respective pot 18 with the outer environment, so that the roots of each plant product, which are located inside a pot 18, are exposed to the environmental conditions outside the respective pot 18.

While each plate 14 supports plant products 20 of a same type, the plant products 20 of successive plates 14 can be different from each other, as schematically shown in Figures 3 and 5.

Furthermore, in the case of plant products 20 intended for sale, the plates 14 can be used to deliver these plant products after harvest, directly to the seller or the end user of these products.

In general, the transit path 12 extends between a feeding station 22 of the plates 14, which comprises a repository (not shown) of empty plates 14 and whose function is to feed plates 14 already equipped with respective plant products 20 in the pots 18, to the transit path 12, and a collection/discard station 24 of the plates 14.

Although the plates 14 fed to the transit path 12 may comprise already germinated plant products 20, the device 10 can optionally be provided with a sowing station 23, interposed between the station 22 and the transit path 12, into which a substrate (not shown) for supporting seeds of the plant products 20 to be cultivated is introduced into each pot 18 associated with a plate 14 whereby, in this case, the growth of the various plant products 20 begins with the step of their sowing and continues with the germination of the seeds.

The plates 14 are fed to the collection/discard station 24 as the plant products 20 associated with them have reached a predetermined level of growth for the collection step, as will be explained in greater detail below. Forwarding of a plate 14 to the collection/discard station 24 can also take place if the plant products 20 are deemed to be subject to an anomalous growth condition, so that they must be removed from the transit path 12 as they are not suitable for sale.

The collection step carried out in the station 24 can involve the collection of the respective products 20 to be sent for sale, for example together with their pots 18 and their plate 14, or, in the case of plant products 20 intended for production of flowers or leaves to be cut, may involve the execution of a cutting operation, for example by means of an automatic cutting equipment (not shown in the figures) associated with the same station 24. If, on the other hand, the plant products 20 are intended for production of fruits, upon reaching a predetermined maturation condition of these fruits, the plates 14 of the respective products 20 are sent to a temporary staging station (not shown) associated with the same station 24, where an operator can collect them. In both cases of plant products 20 intended for the production of flowers or leaves to be cut, or of fruits to be harvested, once the cutting or fruit harvesting operations have been carried out, the respective plates 14 are re-introduced into the transit path 12 where the respective products 20 will be subject to a new step of growth in view of subsequent harvests.

The device 10 is able to autonomously and automatically evaluate whether a plant product 20 must be kept in the transit path 12 to complete its growth step, or whether it has already reached a predetermined growth condition such as to involve sending it to the station 24 for its subsequent transport to a sales facility. The device 10 may also be able to automatically recognize if one or more plant products 20 of the same plate 14 have been subjected to an anomalous growth, so that the plate 14 with the respective plant products 20 must be sent to the station 24 to be discarded.

Conveniently, the transit path 12 comprises a forward line 12a and a return line 12b arranged side by side and substantially coplanar, having opposite directions of movement, both interposed between the feeding station 22 and the collection/discard station 24. Thus, the lines 12a and 12b define together a substantially ring-shaped path along which the plates 14 undergo a cyclic movement until the device 10 detects the reaching of a predetermined condition of growth of the respective plant products 20, or an anomalous growth state, such as to cause the relevant plate 14 to be sent to the collection/discard station 24.

Each forward 12a and return line 12b of the transit path 12 comprises a support structure including uprights 26 and longitudinal members 28 to support respective conveyor belts 30 movable along the directions indicated by arrows A of Figure 2, on which the plates 14 are placed each time. Each conveyor belt 30 is associated with a respective driving motor 32, and at least one of them has bottom openings (not shown in detail) for the purpose that will be better explained below.

At the ends of each forward line 12a or return line 12b, respectively close to the stations 22 and 24, transverse translation means are provided to laterally transfer the plates 14 from the final end of the line 12a closest to the station 24, to the initial end of the line 12b closest to the station 24, or from the opposite final end of the line 12b to the opposite initial end of the line 12a. These transverse translation means comprise respective platforms 34, preferably provided with small conveyor belts which perform a longitudinal movement parallel to the conveyor belts 30, and which are in turn movable according to a to-and-fro lateral movement in order to cause a displacement of the plates 14 in the direction indicated by arrows B of Figure 2.

More particularly, a first transversely movable platform 34 is arranged at the ends of the forward lines 12a and return lines 12b closest to the feed station 22. This first platform 34, in addition to cause the plates 14 to move laterally between the return line 12b and the forward line 12a, allows the plates 14 coming from the feeding station 22, or from the sowing station 23 if this is provided, to be fed into the transit path 12.

Similarly, a second transversely movable platform 34 is arranged at the ends of the forward lines 12a and return lines 12b closest to the collection/discard station 24. This second platform 34, in addition to cause the plates 14 to move laterally between the forward line 12a and the return line 12b, allows the plates 14 coming from the forward line 12a to be sent to the collection/discard station 24. Furthermore, the second platform 34 is intended to feed the plates 14 coming from the collection/discard station 24 to the return line 12b of the transit path 12 in the case of plant products 20 intended for the production of flowers or leaves to be cut or of plant products 20 intended for the production of fruits, after the execution of a cutting operation or a fruit harvesting operation, carried out respectively at the station 24.

In this manner, the transit path 12 of the plates 14, consisting of the forward lines 12a and the return lines 12b as well as by the movable platforms 34 at their ends, constitutes a substantially circular path for the plates 14.

Below one of the forward or return lines 12a, 12b there are provided one or more stationary substantially tank-shaped nourishment containers 36, associated with hydraulic ducts provided with nebulization nozzles (not shown in detail) to perform an aeroponic treatment of feeding the roots of the plant products 20 when a plate 14 passes over it, by delivering a nutritional fluid containing water and nutrients, which is taken by means of the aforementioned ducts from a nutritional fluid reservoir (not shown in the figures) by the operation of a pump (also not shown). The bottom openings of the conveyor belts 30 and the openings made in the pots 18 allow the nutritional fluid nebulized in the nourishment containers 36 to reach the roots of the plant products contained in the pots 18 associated with the various plates 14. Of course, the amount of water and nutrients nebulized inside the containers 36 but which are not directly absorbed by the roots of the products 20, and which therefore falls on the bottom of these containers 36, is sent to the nutritional fluid reservoir to be recovered and put back into circulation in the cultivation device.

Although nebulization of the nutritional fluid at the nourishment containers 36 can take place continuously, independently of the plant products 20 of the various plates 14, the duration and/or intensity of the feeding treatment of the roots of the plant products 20 can take place, as an alternative, in a differentiated manner as a function of the type of plant products 20 of the plates 14 passing over said containers 36 and/or as a consequence of the growth condition of the products 20 of each plate 14, as will be explained in a greater detail below.

Ozonization means for ozonizing the nutritional fluid as well as adjusting means to adjust the amount of oxygen present therein, can be associated with each nourishment containers 36.

Furthermore, a location 38 for treating the aerial part of the plant products 20 can be arranged above the forward line 12a, with the aim of spraying additives, according to the need, capable of improving the condition of the stem, the leaves, the flowers and/or the fruits of the products 20.

Although the present embodiment is particularly suitable for the cultivation of plant products 20 in conditions of natural lighting, both in the case the device 20 is installed in an indoor or outdoor environment, artificial lighting means (not shown in detail for this embodiment) may be provided in order to light the plant products 20, for example comprising a series of lamps placed above the return line 12b.

Moreover, a monitoring location 40 is provided above the forward line 12a, particularly for the purpose of detecting each plate when it passes at this location 40, and of deriving at least one information related to the growth and/or the state of its plant products 20. This location 40 comprises sensor means for detecting a series of data and/or characteristics of the plant products 20 associated with the various plates 14, and for deciding the path the various plates 14 will have to follow after passing under the location 40, and/or the treatments to which their products 20 may be subjected, as a consequence of the data and/or the characteristics of the products 20 detected at this location 40.

More specifically, the location 40 comprises a sensor capable of detecting the identification data of each plate 14, for example through a barcode reader or a reader of another similar code associated with that plate 14, which contain, among other things, data related to the instant in which that plate 14 was introduced into the transit path 12.

Preferably, the sensor means of the location 40 also comprise at least one camera for viewing the plant products 20, to determine their type and size as well as other physical characteristics such as their color, by comparing the characteristics detected for the various products 20 with sample characteristics stored in a memory associated with a programmable electronic control unit PLC (not shown), associated with the device 10 for managing its operation.

In this manner, through the location 40, it is possible to establish the growth time of the plant products 20 of that plate 14, and therefore whether the respective products 20 have reached a predetermined growth condition such as to require their sending to the collection/discard station 24 to perform a harvesting operation which may also involve a cutting operation in the case of products 20 intended for the production of flowers or leaves to be cut, or the harvesting of fruits in the case of products 20 intended for the production of fruits. If the location 40 comprises at least one camera for viewing the products 20, it is also possible to determine whether their growth condition has to be considered anomalous, in which case they are sent to the collection/discard station 24 to be removed.

Furthermore, as a result of the conditions of the products 20 detected at the location 40, a treatment of the aerial part of the plant products 20 can be performed at the location 38, when this is provided.

The monitoring location 40 is connected, by means of the aforementioned electronic control unit PLC, to the feeding station 22 and to the possible sowing station 23, to the collection/discard station 24, to the driving motors 32 for driving the conveyor belts 30 of the forward and return lines 12a, 12b of the transit path 12, to control means of the movable platforms 34, as well as to the possible treatment location 38 for treating the aerial part of the plant products 20 and to possible artificial lighting means, in order to selectively manage the operation of the device 10 based on the conditions of the plant products 20.

Furthermore, the monitoring location 40 can conveniently detect also one or more environmental conditions of the plant products 20, such as their temperature and/or their humidity, through the aforementioned sensor means, in order to modify the temperature and/or humidity of the environment in which the device 10 is arranged, by means of the PLC control unit.

The location 40 can conveniently comprise sensor means for sensing the amount of light radiation to which the various plant products 20 have been exposed during the entire growth step, in order to activate, if necessary, any artificial lighting means.

The electronic control unit PLC is also able to measure the amount of oxygen present in the nutritional fluid nebulized inside the containers 36, through specific sensors arranged in such containers 36, and to modify this amount as desired.

In the operation of the device 10 of the present embodiment, a plurality of plates 14 are stored in a repository associated with the feeding station 22. Each plate 14 is picked up from this repository to insert respective pots 18 into its holes 16 and to associate with each pot 18 a respective plant product 20, for example in the form of a small nursery plant or cutting, or to introduce in each pot 18 a substrate with the seeds of the respective plant product 20 at the possible sowing station 23, after which the plate 14 is fed to the forward line 12a of the transit path 12 through the first platform 34. Moreover, the aforementioned univocal identification member is applied to a surface area of each plate 14 visible from the outside, for example consisting of a barcode or similar.

Each plate 14 fed to the forward line 12a of the path 12 is dragged in the direction of the relative arrow A of Figure 2, for example by means of a step movement, as a result of the movement of the respective conveyor belt 30 controlled by the operation of its driving motor 32, under the control of the electronic unit PLC, until it reaches the opposite end of this line 12a at which it is arranged on the second platform 34 close to the collection/discard station 24.

Each plate 14, along the path of the forward line 12a, passes under the location 40 which allows the presence of that plate 14 to be detected, and which reads its identification data, through the respective sensor means, in order to derive, for example through a calculation performed by the control unit PLC, the growth time of the related products 20.

Furthermore, if the location 40 comprises one or more cameras, the type and size of the plant products 20 and their physical characteristics such as its color are detected, in order to objectively establish the growth condition and the state of the plant products 20 of the relative plate 14.

According to the condition of the products 20 detected through the location 40, if the location 38 is provided, a treatment of the aerial part of the plant products 20 can be performed in correspondence with it.

If the time and condition of growth of the products 20 of a plate 14 corresponds to the predetermined condition for collection of its plant products 20, the second platform 34, at the other end of the forward line 12a, transfers the respective plate 14 to the station 24 where the products 20 are subjected to a collection operation. At the station 24, depending on the type of product 20, an operation of cutting of flowers or leaves can be performed in the case of products 20 intended for the production of flowers or leaves to be cut, or fruit harvesting can take place in the case of products 20 intended for fruit production. If the monitoring means 40 comprise at least one camera, and if an abnormal growth condition of the products 20 of a plate 14 is detected through them, the plate is sent to the station 24 to be discarded.

If, on the other hand, the products 20 of a plate have not yet reached the predetermined condition for harvesting or for the possible cutting or harvesting of fruit, the second platform 34 transfers the plate 14 at the return line 12b of the path 12a, as a result of a movement in the direction of the relevant arrow B of Figure 2, so that the plate 14 can be fed to this return line 12b to continue its movement along the direction indicated by the relevant arrow A of Figure 2, until it reaches the first platform 34 so as to be re-introduced into the path of the forward line 12a, and to continue its cyclic movement, under the control of the unit PLC, until the predetermined collection condition is reached, or for a possible discard thereof.

When a plate 14, during its movement along the forward line 12a, is located below the monitoring location 40, the sensors of this location can evaluate, in addition to the state and condition of growth of the plant products 20 of that plate 14, also at least one condition of such products 20 connected to environmental conditions, such as their temperature and humidity, in order to modify, if necessary, the operating conditions of the device 10.

When a plate 14, during its movement along the line 12b, passes over one of the nourishment containers 36, the nutritional fluid delivered by the nebulization nozzles present therein, which are connected to the respective hydraulic ducts, passes through the bottom openings of the respective conveyor belt 30 as well as through the communication openings of the pots 18 in order to reach the roots of the products 20 so as to allow the products 20 to be fed. The nebulization time of the nutritional fluid to the various products 20 of a plate 14, and therefore the amount of fluid delivered to the products 20, is a function of the size of the nourishment containers 36 in the longitudinal direction of the line 12b and of their number, as well as of the speed of movement of the various plates 14 along the line 12b.

Furthermore, the amount of oxygen in the nutritional fluid can be varied according to the need, by intervening on the ozonization means of the nutritional fluid, in consideration of the oxygen values detected by sensors dedicated to this purpose associated with the containers 36.

If artificial lighting means are provided, their possible on and off time can be managed by the control unit PLC taking into account the condition of the plant products 20 of the various plates 14 and the amount of light radiation to which they have been exposed during the cyclic paths followed in the previous growth step.

In any case, when the sensor means of the monitoring location 40 determine that the plant products 20 of a plate 14 are suitable for harvesting or for being subjected to a step of cutting of their flowers or leaves, or of harvesting of their fruits, after a series of transit cycles in the device 10, which may also include time periods in which the movement of the plates 14 is stopped for a predetermined time, the respective plate 14 is sent, under the control of the control unit PLC, to the station 24 for the final collection step.

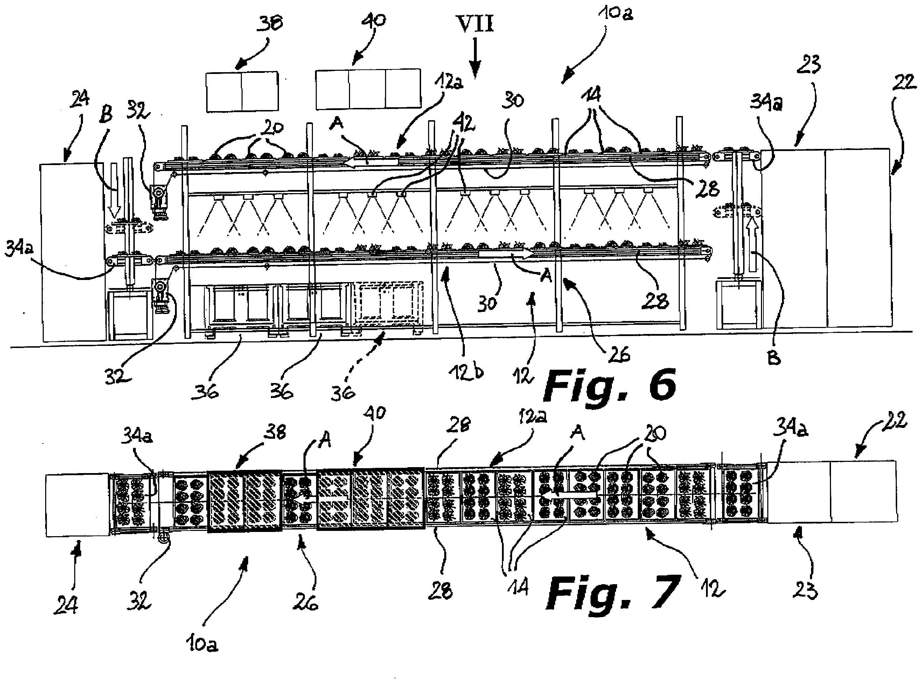

According to another embodiment of the invention, the parts of which not explicitly described below are the same or are similar to those of the previous embodiment, and with particular reference to figures 6 and 7 of the drawings, the device of the invention, here indicated 10a, has a structure similar to that of the previous embodiment, apart from the fact that the forward lines 12a and return lines 12b are arranged so as to be substantially overlapping each other on a same vertical plane.

More particularly, the forward line 12a is located above the return line 12b, which allows to further reduce the space occupied by the device 10a, the plates 14 being able to be moved along these lines in the relevant directions indicated by arrows A of Figures 6 and 7.

The transverse translation means of the plates 14, arranged at the opposite ends of the pair of lines 12a and 12b, consist in this case of platforms 34a which are vertically movable according to a to-and-fro upward and downward movement in the direction indicated by arrows B of Figures 6 and 7, and according to a longitudinal movement parallel to the conveyor belts 30 by means of small conveyor belts associated with said platforms 34a.

More particularly, a first platform 34a movable vertically with respect to the conveyor belts 30 is arranged at the ends of the forward and return lines 12a, 12b closest to the feeding station 22, to move each plate 14 each time from the return line 12b to the forward line 12a by an upward movement, while at the ends of the forward and return lines 12a, 12b closest to the collection/discard station 24 there is provided a second platform 34a movable vertically with respect to the conveyor belts 30, to move each plate 14 each time from the forward line 12a to the return line 12b by a downward movement.

Similarly to the previous embodiment, the first platform 34a is also capable of transferring the plates 14 from the feeding station 22, or from the seeding station 23 when this is provided, to the forward line 12a of the transit path 12, while the second platform 34a is also used to transfer the plates 14 from the forward line 12a to the feed/discard station 24, as well as to re-enter the plates 14 on the return line 12b of the transit path 12 starting from the station 24 after cutting or harvesting of fruits have been carried out, in the case of plant products 20 intended for cutting cut flowers or leaves, or for harvesting fruits.

Since this embodiment is conceived more particularly for use in closed or covered areas, it necessarily comprises artificial lighting means consisting of lamps 42 supported by the support structure of the device 10a below the forward line 12a, such that these lamps 42 overhang the return line 12b. The control unit PLC takes into account the amount of light delivered by the lamps 42 to the products 20 to determine the optimum amount of lighting that must be provided to the various plant products 20.

The operation of this embodiment is entirely similar to that described above for the first embodiment, apart from the fact that the platforms 34a perform an upward or downward movement to move each time the plates 14 vertically together with the respective plant products 20.

Of course, modifications and variations may be made to the system of the invention within the reach of the person skilled in the art, while remaining within the scope of the attached claims. In particular, the various components of the system of the invention can be replaced by technically equivalent elements.

## Claims

1. Device for the aeroponic cultivation of plant products, comprising a plurality of support plates (14) each of which is provided with at least one seat (16) for removably receiving a respective pot (18) containing a plant product (20), which pot (18) has openings to allow communication between the inside thereof and the outer environment, and at least one stationary nourishment container (36) including nebulization nozzles associated with hydraulic ducts, to deliver a nourishing fluid containing water and nutrients to the roots of said plant products (20) when one or more pots (18) are at said nourishment container (36), wherein said device comprises a transit path (12) of the plant products (20) along which the relevant plant products (20) are subjected to a growth step, a feeding station (22) intended to feed in succession said plates (14) to said transit path (12), a collection/discard station (24) for collecting/discarding said plates (14), to which the plates (14) are fed from the transit path (12) upon reaching a predetermined growth or upon the occurrence of an anomalous growth condition, and moving means (30, 32) intended to move said plates in succession between the aforesaid feed (22) and collection/discard (24) stations, and **characterised in that** a monitoring location (40) is provided along the transit path (12), which is connected to a programmable control unit (PLC) associated with the device (10; 10a) to manage its operation, which location includes sensor means adapted to detect the presence of each plate (14) when it passes at said monitoring location (40), and a memory associated with the control unit (PLC), in which sample characteristics of the plant products are stored, with the purpose of deriving at least one information related to the growth and/or to the condition of the plant products (20) associated with that plate (14) to decide whether that plate (14) must continue along the transit path (12) or the plate (14) must be sent to said collection/discard station (24).

2. Device according to claim 1, **characterized in that** said control unit (PLC) is adapted to determine the growth time of the plant products (20) associated with a plate (14) and whether they have reached a predetermined growth condition for sending it to the collection/discard station (24) as a result of a comparison of the characteristics of the plant products (20) detected by said sensor means and the sample characteristics of the plant products (20) stored in said memory associated with the control unit (PLC).

3. Device according to claim 1 or 2, **characterized in that** said transit path (12) comprises a forward line (12a) and a return line (12b) interposed between said feeding and collection/discard stations (22, 24) for feeding or collecting/discarding said plates (14), which forward and return lines (12a, 12b) define together a substantially loop path for moving said plates (14).

4. Device according to claim 3, **characterized in that** each of said forward and return lines (12a, 12b) of the transit path (12) comprises longitudinal movement means including respective motorized conveyor belts (30, 32) for moving longitudinally in succession said plates (14), at least the conveyor belt of one of said forward or return lines (12a, 12b) that extends above said nourishment containers (36) being provided with bottom openings.

5. Device according to claim 3 or 4, **characterized in that** said forward and return lines (12a, 12b) of the transit path (12) are arranged side by side substantially on a same plane, and **in that** respective transverse translation means (34) of the plates (14) are provided at both ends of said forward and return lines (12a, 12b) to translate the plates (14) laterally from the forward line (12a) to the return line (12b), or vice-versa.

6. Device according to claim 3 or 4, **characterized in that** said forward and return lines (12a, 12b) of the transit path (12) are arranged substantially on a vertical plane so as to be superimposed, and **in that** respective transverse translation means (34a) of the plates (14) are provided at both the ends of said forward and return lines (12a, 12b) to translate the plates (14) vertically from the forward line (12a) to the return line (12b), or vice-versa.

7. Device according to claim 5 or 6, **characterized in that** said transverse translation means (34; 34a) of the plates (14) include a small conveyor belt intended to apply a longitudinal movement to one plate (14) at a time from or to said forward line (12a) or said return line (12b), or from said feeding station (22) to said forward line (12a), as well as from said forward line (12a) to the collection/discard station (24) and from the collection/discard station (24) to said return line (12b).

8. Device according to any one of claims 2 to 7, **characterized in that** it comprises lighting means (42) of the plant products (20), which means can be activated as a function of the outcome of the monitoring carried out at said monitoring location (40).

9. Device according to any one of claims 2 to 8, **characterized in that** each nourishment container (36) comprises ozonizing means for ozonizing said nourishing fluid.

10. Device according to any one of claims 2 to 9, **characterized in that** said sensor means of the monitoring location (40) include camera means adapted to assess the actual condition of the plant products (20) of each plate (14), which are adapted to determine the shape and/or the size and/or the color of such plant products (20) in order to decide, through the programmable control unit (PLC), whether the plant products (20) of a plate (14) have reached a predetermined growth condition so that that plate (14) must be sent to the collection/discard station (24) for collection, or if they are subject to an anomalous growth condition requiring the plate to be sent to the collection/discard station (24) in order to be discarded.

11. Device according to any one of claims 2 to 10, **characterized in that** said sensor means of the monitoring location (40) include sensors for sensing the temperature and/or the humidity of the plant products (20), and/or for sensing the amount of oxygen in the nourishing fluid, as well as for sensing the amount of the light radiation delivered to the plant products (20), the data detected through said sensor means being used to change, through said programmable control unit (PLC), at least one condition of the environment in which the device (10; 10a) is installed.

12. Device according to any one of claims 2 to 11, **characterized in that** said programmable control unit (PLC) is connected to said moving means (30, 32) for moving the plates (14), to said transverse translation means (34; 34a) for moving the plates (14), to the feeding station (22) and to the collection/discard station (24), in order to control the movement of each plate (14) from said feeding station (22) and/or to and from the collection/discard station (24), as well as along the forward and return lines (12a, 12b) of the transit path (12).

13. Device according to any one of claims 2 to 12, **characterized in that** treatment means (38) for treating the aerial part of said plant products (20) are provided downstream of said monitoring location (40), which means can be activated as a result of the detection of at least one predetermined condition of the respective plant products (20) through the sensor means of the monitoring location (40).

14. Device according to any one of claims 1 to 13, **characterized in that** a sowing station (23) of plant products (20) is interposed between said feeding station (22) of the plates (14) and said transit path (12) of the plates (14), at which seeds of the plant products (20) are introduced into each pot (18) associated with said plates (14).

15. Device according to any one of claims 1 to 14, **characterized in that** said collection/discard station (24) of the plates (14) comprises cutting means for cutting flowers or leaves of said plant products (20).

16. Device according to any one of claims 1 to 15, **characterized in that** said collection/discard station (24) of the plates (14) comprises a collection location for harvesting fruits of said plant products (20).

## Patentansprüche

1. Vorrichtung für die aeroponische Kultivierung von Pflanzenprodukten, umfassend eine Vielzahl von Trägerplatten (14), von denen jede mit mindestens einem Sitz (16) zur abnehmbaren Aufnahme eines jeweiligen Topfes (18) versehen ist, der ein Pflanzenprodukt (20) enthält, wobei der Topf (18) Öffnungen aufweist, um eine Verbindung zwischen seinem Inneren und der äußeren Umgebung zu ermöglichen, und mindestens einen stationären Nährstoffbehälter (36) mit Vernebelungsdüsen, die mit hydraulischen Leitungen verbunden sind, um ein Nährstofffluid, das Wasser und Nährstoffe enthält, an die Wurzeln der Pflanzenprodukte (20) zu liefern, wenn sich ein oder mehrere Töpfe (18) beim Nährstoffbehälter (36) befinden,
wobei die Vorrichtung einen Transitpfad (12) der Pflanzenprodukte (20), entlang dessen die betreffenden Pflanzenprodukte (20) einem Wachstumsschritt unterzogen werden, eine Zuführstation (22), die dazu bestimmt ist, die Platten (14) nacheinander dem Transitpfad (12) zuzuführen, eine Sammel-/Abwurfstation (24) zum Sammeln/Abwerfen der Platten (14), der die Platten (14) vom Transitpfad (12) bei Erreichen eines vorbestimmten Wachstums oder bei Auftreten eines anomalen Wachstumszustands zugeführt werden, und eine Bewegungseinrichtung (30, 32), die dazu bestimmt ist, die Platten nacheinander zwischen den vorgenannten Zuführ- (22) und Sammel-/Abwurfstationen (24) zu bewegen, umfasst und
**dadurch gekennzeichnet, dass** eine Überwachungsstelle (40) entlang des Transitpfades (12) vorgesehen ist, die mit einer programmierbaren Steuereinheit (PLC) verbunden ist, welche mit der Vorrichtung (10; 10a) verbunden ist, um deren Betrieb zu steuern, wobei diese Stelle Sensormittel, die dazu ausgelegt sind, das Vorhandensein jeder Platte (14) zu erfassen, wenn sie die Überwachungsstelle (40) passiert, und einen der Steuereinheit (PLC) zugeordneten Speicher umfasst, in dem Probenmerkmale der Pflanzenprodukte gespeichert werden, um mindestens eine Information abzuleiten, die sich auf das Wachstum und/oder den Zustand der Pflanzenprodukte (20) bezieht, die dieser Platte (14) zugeordnet sind, um zu entscheiden, ob diese Platte (14) entlang des Transitpfades (12) weitergeführt werden muss oder die Platte (14) zu der Sammel-/Abwurfstation (24) geschickt werden muss.

2. Vorrichtung nach Anspruch 1, **dadurch gekennzeichnet, dass** die Steuereinheit (PLC) dazu ausgelegt ist, die Wachstumszeit der Pflanzenprodukte (20), die einer Platte (14) zugeordnet sind, und ob sie eine vorbestimmte Wachstumsbedingung erreicht haben, um sie an die Sammel-/Abwurfstation (24) zu senden, als Ergebnis eines Vergleichs der Merkmale der Pflanzenprodukte (20), die von den Sensormitteln erfasst werden, und der Probenmerkmale der Pflanzenprodukte (20), die in dem der Steuereinheit (PLC) zugeordneten Speicher gespeichert sind, zu bestimmen.

3. Vorrichtung nach Anspruch 1 oder 2, **dadurch gekennzeichnet, dass** der Transitpfad (12) eine Vorwärtslinie (12a) und eine Rückwärtslinie (12b) umfasst, die zwischen den Zuführ- und Sammel-/Abwurfstationen (22, 24) zum Zuführen oder Sammeln/Abwerfen der Platten (14) angeordnet sind, wobei die Vorwärts- und Rückwärtslinien (12a, 12b) zusammen einen im Wesentlichen schleifenförmigen Weg zum Bewegen der Platten (14) definieren.

4. Vorrichtung nach Anspruch 3, **dadurch gekennzeichnet, dass** jede der Vorwärts- und Rückwärtslinien (12a, 12b) des Transitpfades (12) Längsbewegungsmittel umfasst, die jeweilige motorisierte Förderbänder (30, 32) zum aufeinanderfolgenden Bewegen der Platten (14) in Längsrichtung umfassen, wobei zumindest das Förderband einer der Vorwärts- oder Rückwärtslinien (12a, 12b), das sich über die Nährstoffbehälter (36) erstreckt, mit Bodenöffnungen versehen ist.

5. Vorrichtung nach Anspruch 3 oder 4, **dadurch gekennzeichnet, dass** die Vorwärts- und Rückwärtslinien (12a, 12b) des Transitpfades (12) nebeneinander im Wesentlichen in derselben Ebene angeordnet sind, und dass an beiden Enden der Vorwärts- und Rückwärtslinien (12a, 12b) jeweilige Transversalverschiebungsmittel (34) der Platten (14) vorgesehen sind, um die Platten (14) seitlich von der Vorwärtslinie (12a) zur Rückwärtslinie (12b) oder umgekehrt zu verschieben.

6. Vorrichtung nach Anspruch 3 oder 4, **dadurch gekennzeichnet, dass** die Vorwärts- und Rückwärtslinien (12a, 12b) des Transitpfades (12) im Wesentlichen in einer vertikalen Ebene angeordnet sind, so dass sie sich überlagern, und dass jeweilige Transversalverschiebungsmittel (34a) der Platten (14) an beiden Enden der Vorwärts- und Rückwärtslinien (12a, 12b) vorgesehen sind, um die Platten (14) vertikal von der Vorwärtslinie (12a) zur Rückwärtslinie (12b) oder umgekehrt zu verschieben.

7. Vorrichtung nach Anspruch 5 oder 6, **dadurch gekennzeichnet, dass** die Transversalverschiebungsmittel (34; 34a) der Platten (14) ein kleines Förderband umfassen, das dazu bestimmt ist, jeweils eine Platte (14) auf einmal von oder zu der Vorwärtslinie (12a) oder der Rückwärtslinie (12b), oder von der Zuführstation (22) zu der Vorwärtslinie (12a), sowie von der Vorwärtslinie (12a) zu der Sammel-/Abwurfstation (24) und von der Sammel-/Abwurfstation (24) zu der Rückwärtslinie (12b) einer Längsbewegung zu unterziehen.

8. Vorrichtung nach einem der Ansprüche 2 bis 7, **dadurch gekennzeichnet, dass** sie Beleuchtungsmittel (42) der Pflanzenprodukte (20) umfasst, die in Abhängigkeit von dem Ergebnis der an der Überwachungsstelle (40) durchgeführten Überwachung aktiviert werden können.

9. Vorrichtung nach einem der Ansprüche 2 bis 8, **dadurch gekennzeichnet, dass** jeder Nährstoffbehälter (36) Ozonisierungsmittel zum Ozonisieren des Nährstofffluids umfasst.

10. Vorrichtung nach einem der Ansprüche 2 bis 9, **dadurch gekennzeichnet, dass** die Sensormittel der Überwachungsstelle (40) zur Beurteilung des tatsächlichen Zustandes der Pflanzenprodukte (20) jeder Platte (14) ausgelegte Kameramittel umfassen, die dazu ausgelegt sind, die Form und/oder die Größe und/oder die Farbe solcher Pflanzenprodukte (20) zu bestimmen, um durch die programmierbare Steuereinheit (PLC) zu entscheiden, ob die Pflanzenprodukte (20) einer Platte (14) eine vorbestimmte Wachstumsbedingung erreicht haben, so dass diese Platte (14) zum Sammeln an die Sammel-/Abwurfstation (24) geschickt werden muss, oder ob sie einer anomalen Wachstumsbedingung unterliegen, die es erfordert, die Platte an die Sammel-/Abwurfstation (24) zu schicken, um sie zu abzuwerfen.

11. Vorrichtung nach einem der Ansprüche 2 bis 10, **dadurch gekennzeichnet, dass** die Sensormittel der Überwachungsstelle (40) Sensoren zum Erfassen der Temperatur und/oder der Feuchtigkeit der Pflanzenprodukte (20) und/oder zum Erfassen der Menge an Sauerstoff im Nährstofffluid sowie zum Erfassen der Menge an Lichtstrahlung, die den Pflanzenprodukten (20) zugeführt wird, umfassen, wobei die durch die Sensormittel erfassten Daten verwendet werden, um über die programmierbare Steuereinheit (PLC) mindestens einen Zustand der Umgebung, in der die Vorrichtung (10; 10a) installiert ist, zu ändern.

12. Vorrichtung nach einem der Ansprüche 2 bis 11, **dadurch gekennzeichnet, dass** die programmierbare Steuereinheit (PLC) mit den Bewegungsmitteln (30, 32) zum Bewegen der Platten (14), mit den Transversalverschiebungsmitteln (34; 34a) zum Bewegen der Platten (14), mit der Zuführstation (22) und mit der Sammel-/Abwurfstation (24) verbunden ist, um die Bewegung jeder Platte (14) von der Zuführstation (22) und/oder zu der und von der Sammel-/Abwurfstation (24) sowie entlang der Vorwärts- und Rückwärtslinien (12a, 12b) des Transitpfades (12) zu steuern.

13. Vorrichtung nach einem der Ansprüche 2 bis 12, **dadurch gekennzeichnet, dass** stromabwärts der Überwachungsstelle (40) Behandlungsmittel (38) zur Behandlung des oberirdischen Teils der Pflanzenprodukte (20) vorgesehen sind, wobei diese Mittel als Ergebnis der Erfassung mindestens eines vorbestimmten Zustands der jeweiligen Pflanzenprodukte (20) durch die Sensormittel der Überwachungsstelle (40) aktiviert werden können.

14. Vorrichtung nach einem der Ansprüche 1 bis 13, **dadurch gekennzeichnet, dass** zwischen der Zuführstation (22) der Platten (14) und dem Transitpfad (12) der Platten (14) eine Aussaatstation (23) der Pflanzenprodukte (20) angeordnet ist, an der Samen der Pflanzenprodukte (20) in jeden den Platten (14) zugeordneten Topf (18) eingebracht werden.

15. Vorrichtung nach einem der Ansprüche 1 bis 14, **dadurch gekennzeichnet, dass** die Sammel-/Abwurfstation (24) der Platten (14) Schneidmittel zum Schneiden von Blüten oder Blättern der Pflanzenprodukte (20) umfasst.

16. Vorrichtung nach einem der Ansprüche 1 bis 15, **dadurch gekennzeichnet, dass** die Sammel-/Abwurfstation (24) der Platten (14) eine Sammelstelle zum Ernten von Früchten der Pflanzenprodukte (20) umfasst.

## Revendications

1. Dispositif pour la culture aéroponique de produits végétaux, comprenant une pluralité de plateaux de support (14) dont chacun est muni d'au moins un siège (16) pour recevoir de manière amovible un pot respectif (18) contenant un produit végétal (20), lequel pot (18) présente des ouvertures pour permettre la communication entre l'intérieur de celui-ci et l'environnement extérieur, et au moins un récipient d'alimentation (36) fixe comprenant des buses de nébulisation associées à des conduits hydrauliques, pour délivrer un fluide nourricier contenant de l'eau et des nutriments aux racines desdits produits végétaux (20) lorsqu'un ou plusieurs pots (18) se trouvent au niveau dudit récipient d'alimentation (36),
ledit dispositif comprenant un chemin de transit (12) des produits végétaux (20) le long duquel les produits végétaux concernés (20) sont soumis à une étape de croissance, un poste d'alimentation (22) destiné à alimenter successivement lesdits plateaux (14) vers ledit chemin de transit (12), un poste de collecte/élimination (24) pour collecter/éliminer lesdits plateaux (14), vers lequel les plateaux (14) sont alimentés depuis le chemin de transit (12) lorsqu'une une croissance prédéterminée est atteinte ou lors de l'apparition d'une condition de croissance anormale, et des moyens de déplacement (30, 32) destinés à déplacer successivement lesdits plateaux entre les postes d'alimentation (22) et de collecte/élimination (24) précités, et **caractérisé en ce qu'**un emplacement de surveillance (40) est prévu le long du chemin de transit (12), qui est relié à une unité de commande programmable (PLC) associée au dispositif (10 ; 10a) pour gérer son fonctionnement, lequel emplacement comprend des moyens formant capteurs adaptés pour détecter la présence de chaque plateau (14) lorsqu'il passe audit emplacement de surveillance (40), et une mémoire associée à l'unité de commande (PLC), dans laquelle sont stockées des caractéristiques d'échantillon des produits végétaux, dans le but de dériver au moins une information relative à la croissance et/ou à l'état des produits végétaux (20) associés à ce plateau (14) pour décider si ce plateau (14) doit continuer le long du chemin de transit (12) ou si le plateau (14) doit être envoyé audit poste de collecte/élimination (24) .

2. Dispositif selon la revendication 1, **caractérisé en ce que** ladite unité de commande (PLC) est adaptée pour déterminer le temps de croissance des produits végétaux (20) associés à un plateau (14) et, s'ils ont atteint une condition de croissance prédéterminée, pour l'envoyer au poste de collecte/élimination (24) à la suite d'une comparaison des caractéristiques des produits végétaux (20) détectés par lesdits moyens formant capteurs et des caractéristiques d'échantillon des produits végétaux (20) stockés dans ladite mémoire associée à l'unité de commande (PLC).

3. Dispositif selon la revendication 1 ou la revendication 2, **caractérisé en ce que** ledit chemin de transit (12) comprend une ligne aller (12a) et une ligne retour (12b) interposées entre lesdits postes d'alimentation et de collecte/élimination (22, 24) pour alimenter ou collecter/éliminer lesdits plateaux (14), lesquelles lignes aller et retour (12a, 12b) définissent ensemble un chemin sensiblement en boucle pour déplacer lesdits plateaux (14).

4. Dispositif selon la revendication 3, **caractérisé en ce que** chacune desdites lignes aller et retour (12a, 12b) du chemin de transit (12) comprend des moyens de déplacement longitudinal comprenant des bandes transporteuses motorisées respectives (30, 32) pour déplacer successivement longitudinalement lesdits plateaux (14), au moins la bande transporteuse de l'une desdites lignes aller ou retour (12a, 12b) qui s'étend au-dessus desdits conteneurs d'alimentation (36) étant pourvue d'ouvertures de fond.

5. Dispositif selon la revendication 3 ou la revendication 4, **caractérisé en ce que** lesdites lignes aller et retour (12a, 12b) du chemin de transit (12) sont disposées côte à côte sensiblement sur un même plan, et **en ce que** des moyens respectifs de translation transversale (34) des plateaux (14) sont prévus aux deux extrémités desdites lignes aller et retour (12a, 12b) pour translater les plateaux (14) latéralement, depuis la ligne aller (12a) vers la ligne retour (12b), ou inversement.

6. Dispositif selon la revendication 3 ou la revendication 4, **caractérisé en ce que** lesdites lignes aller et retour (12a, 12b) du chemin de transit (12) sont disposées sensiblement sur un plan vertical de façon à se superposer, et **en ce que** des moyens respectifs de translation transversale (34a) des plateaux (14) sont prévus aux deux extrémités desdites lignes aller et retour (12a, 12b) pour translater les plateaux (14) verticalement de la ligne aller (12a) vers la ligne retour (12b), ou inversement.

7. Dispositif selon la revendication 5 ou la revendication 6, **caractérisé en ce que** lesdits moyens de translation transversale (34 ; 34a) des plateaux (14) comportent une petite bande transporteuse destinée à appliquer un mouvement longitudinal à un plateau (14) à la fois depuis ou vers ladite ligne aller (12a) ou ladite ligne retour (12b), ou depuis ledit poste d'alimentation (22) vers ladite ligne aller (12a), ainsi que depuis ladite ligne aller (12a) vers le poste de collecte/élimination (24) et depuis le poste de collecte/élimination (24) vers ladite ligne de retour (12b).

8. Dispositif selon l'une quelconque des revendications 2 à 7, **caractérisé en ce qu'**il comprend des moyens d'éclairage (42) des produits végétaux (20), lesquels moyens peuvent être activés en fonction du résultat de la surveillance effectuée au niveau dudit emplacement de surveillance (40).

9. Dispositif selon l'une quelconque des revendications 2 à 8, **caractérisé en ce que** chaque récipient d'alimentation (36) comprend des moyens d'ozonation pour ozoniser ledit fluide d'alimentation.

10. Dispositif selon l'une quelconque des revendications 2 à 9, **caractérisé en ce que** lesdits moyens formant capteurs de l'emplacement de surveillance (40) comprennent des moyens formant caméra adaptés pour évaluer l'état réel des produits végétaux (20) de chaque plateau (14), qui sont adaptés pour déterminer la forme et/ou la taille et/ou la couleur de tels produits végétaux (20) afin de décider, par l'intermédiaire de l'unité de commande programmable (PLC), si les produits végétaux (20) d'un plateau (14) ont atteint un état de croissance prédéterminé pour que ce plateau (14) doive être envoyé au poste de collecte/élimination (24) pour collecte, ou s'ils sont soumis à une condition de croissance anormale nécessitant que le plateau soit envoyé au poste de collecte/élimination (24) afin d'être éliminé.

11. Dispositif selon l'une quelconque des revendications 2 à 10, **caractérisé en ce que** lesdits moyens formant capteurs de l'emplacement de surveillance (40) comprennent des capteurs pour capter la température et/ou l'humidité des produits végétaux (20), et/ou pour capter la quantité d'oxygène dans le fluide nourricier, ainsi que pour capter la quantité de rayonnement lumineux délivré aux produits végétaux (20), les données détectées par lesdits moyens formant capteurs étant utilisées pour modifier, par l'intermédiaire de ladite unité de commande programmable (PLC), au moins une condition de l'environnement dans lequel le dispositif (10 ; 10a) est installé.

12. Dispositif selon l'une quelconque des revendications 2 à 11, **caractérisé en ce que** ladite unité de commande programmable (PLC) est reliée auxdits moyens de déplacement (30, 32) pour déplacer les plateaux (14), auxdits moyens de translation transversale (34 ; 34a) pour déplacer les plateaux (14), au poste d'alimentation (22) et au poste de collecte/élimination (24), afin de commander le déplacement de chaque plateau (14) depuis ledit poste d'alimentation (22) et/ou vers et depuis le poste (24) de collecte/élimination, ainsi que le long des lignes aller et retour (12a, 12b) du chemin de transit (12).

13. Dispositif selon l'une quelconque des revendications 2 à 12, **caractérisé en ce que** des moyens de traitement (38) pour traiter la partie aérienne desdits produits végétaux (20) sont prévus en aval dudit emplacement de surveillance (40), lesquels moyens peuvent être activés à la suite de la détection d'au moins un état prédéterminé des produits végétaux respectifs (20) à travers les moyens formant capteurs de l'emplacement de surveillance (40).

14. Dispositif selon l'une quelconque des revendications 1 à 13, **caractérisé en ce qu'**un poste de semis (23) de produits végétaux (20) est interposé entre ledit poste d'alimentation (22) des plateaux (14) et ledit chemin de transit (12) des plateaux (14), au niveau duquel des graines des produits végétaux (20) sont introduites dans chaque pot (18) associé auxdits plateaux (14).

15. Dispositif selon l'une quelconque des revendications 1 à 14, **caractérisé en ce que** ledit poste de collecte/élimination (24) des plateaux (14) comprend des moyens de coupe pour couper des fleurs ou des feuilles desdits produits végétaux (20) .

16. Dispositif selon l'une quelconque des revendications 1 à 15, **caractérisé en ce que** ledit poste de collecte/élimination (24) des plateaux (14) comprend un emplacement de collecte pour récolter les fruits desdits produits végétaux (20).
